# EUROPEAN PATENT APPLICATION

(11) **EP 4 488 037 A1**
(43) Date of publication of application: **08.01.2025**
(21) Application number: 22929656.1
(22) Date of filing: 24.12.2022
(51) Int. Cl.: B29C 64/386

(54) **MODEL SUPPORT POINT SETTING METHOD AND APPARATUS, ELECTRONIC DEVICE AND READABLE STORAGE MEDIUM**

(30) Priority: 01.03.2022 CN 202210194013
(71) Applicant: Shenzhen Creality 3D Technology Co., Ltd., Shenzhen, Guangdong 518110 (CN)
(72) Inventor: AO, Danjun, Shenzhen, Guangdong 518110 (CN); TANG, Jingke, Shenzhen, Guangdong 518110 (CN); WANG, Jiang, Shenzhen, Guangdong 518110 (CN)
(74) Representative: Zaboliene, Reda
(86) International application number: PCT/CN2022/141716
(87) International publication number: WO 2023/165232

(57) **Abstract**

The present application provides a model support point setting method, a device, an electronic device, and a computer readable storage medium, the method includes: layering a model into a plurality of layers according to a preset layer height, and obtaining a contour of each of the plurality of layers; locating a suspended layer according to the contour of each of the plurality of layers, the model including a suspended part, and the suspended layer being the lowest layer of the suspended part; obtaining a suspension position of the suspended layer according to a contour of a lower layer of the suspended layer and a contour of the suspended layer; determining a contour of an overhang position according to the suspension position of the suspended layer, and determining a sharp corner area and a non-sharp corner area of the overhang position according to the contour of the overhang position; and setting support points on the sharp corner area and the non-sharp corner area of the overhang position according to preset support point densities corresponding to the sharp corner area and the non-sharp corner area of the overhang position. The present application is capable of setting support points on a sharp corner area that is easy to collapse of a model, to avoid a situation of a model printing failure due to absences of the support points on the sharp corner area.

## Description

The present application requires a priority of a Chinese patent application filed with the Chinese Patent Office on March 01, 2022, with application number 202210194013.1 and the application name "MODEL SUPPORT POINT SETTING METHOD AND APPARATUS, ELECTRONIC DEVICE AND READABLE STORAGE MEDIUM", the entire contents of the Chinese patent application are incorporated by reference in the present application.

### TECHNICAL FIELD

This application relates to the field of three-dimensional (3D) printing technologies, and specifically, to a model support point setting method, a model support point setting device, an electronic device, and a computer readable storage medium.

### BACKGROUND

3D printing (rapid proto-typing technology) is a cumulative manufacturing technology, also known as additive manufacturing. The 3D printing is a technology that uses bondable materials such as special waxes, powdered metals, or plastics to print 3D objects according to digital model files.

In the current model support point automatic generation software, when setting support points on a model, the support points are set on overhang positions that need to be supported according to preset support point densities, this manner may cause some parts of the model that are easy to collapse without support points, and the parts of the model may collapse, resulting in a printing failure of the model.

### SUMMARY

Accordingly, this application provides a model support point setting method, a model support point setting device, an electronic device, and a computer readable storage medium, which is capable of setting support points on a sharp corner area that is easy to collapse of a model, to avoid a situation of a model printing failure due to absences of the support points on the sharp corner area.

First aspect of this application provides a model support point setting method, the model support point setting method includes: layering a model into a plurality of layers according to a preset layer height, and obtaining a contour of each of the plurality of layers; locating a suspended layer according to the contour of each of the plurality of layers, the model including a suspended part, and the suspended layer being the lowest layer of the suspended part; obtaining a suspension position of the suspended layer according to a contour of a lower layer of the suspended layer and a contour of the suspended layer; determining a contour of an overhang position according to the suspension position of the suspended layer, and determining a sharp corner area and a non-sharp corner area of the overhang position according to the contour of the overhang position; and setting support points on the sharp corner area and the non-sharp corner area of the overhang position according to preset support point densities corresponding to the sharp corner area and the non-sharp corner area of the overhang position.

Using this technical scheme, by obtaining the contour of the overhang position of the model, the overhang position is divided into a sharp corner area and a non-sharp corner area, and the sharp corner area and the non-sharp corner area can correspond to different support point densities, so that support points can be set on the sharp corner area that is easy to collapse of the model, and the situation of the model printing failure due to absences of the support points on the sharp corner area can be avoided.

Exemplarily, the method of determining the contour of the overhang position according to the suspension position of the suspended layer includes: determining a first contour according to a safety offset value and the contour of the lower layer of the suspended layer; determining a second contour according to a tilt offset value and the first contour; and obtaining the contour of the overhang position by subtracting the first contour and the second contour with a contour of the suspension position of the suspended layer; or determining the first contour according to the safety offset value and the contour of the lower layer of the suspended layer; and obtaining the contour of the overhang position by subtracting the first contour with the contour of the suspension position of the suspended layer; or defining the contour of the suspension position of the suspended layer as the contour of the overhang position.

Using this technical scheme, the contour of the overhang layer can be divided into the first contour, the second contour and the contour of the overhang position, the overhang position is provided with support points, the first contour and the second contour can be provided with or not provided with support points, if the first contour and the second contour are not provided with support points, the number of support points of the model can be reduced, and a model printing speed can be improved.

Exemplarily, the model support point setting method further includes: setting the support points on an area where the first contour is located according to a preset support point density corresponding to the first contour; and setting the support points on an area where the second contour is located according to a preset support point density corresponding to the second contour.

Using this technical scheme, support points can be set on the first contour and the second contour, and the first contour and the second contour can have different densities of support points.

Exemplarily, the method of determining the sharp corner area of the overhang position according to the contour of the overhang position includes: lessening the contour of the overhang position to obtain a first intermediate contour according to the safety offset value; enlarging the first intermediate contour by the safety offset value to obtain a second intermediate contour according to a jtSquare parameter attribute; and determining the sharp corner area of the overhang position by subtracting the second intermediate contour with the contour of the overhang position.

Using this technical scheme, the contour of the overhang position can be lessened by the safety offset value to obtain the first intermediate contour, and the first intermediate contour can be enlarged by the safety offset value to obtain the second intermediate contour according to the jtSquare parameter attribute, and then the sharp corner area of the overhang position can be determined by subtracting the second intermediate contour with the contour of the overhang position.

Exemplarily, the non-sharp corner area of the overhang position includes two contour areas, the two contour areas respectively correspond to one preset support point density, and the two contour areas are determined by: subtracting the first intermediate contour with the second intermediate contour to obtain a third contour; and defining the first intermediate contour and the third contour as the two contour areas of the non-sharp corner area of the overhang position.

Using this technical scheme, the non-sharp corner area of the overhang position can be divided into two contour areas, and different support point densities or the same support point densities can be set for the two contour areas of the non-sharp corner area to achieve model printing support.

Exemplarily, the method of determining the sharp corner area of the overhang position according to the contour of the overhang position includes: lessening the contour of the overhang position to obtain a first intermediate contour according to the safety offset value; subtracting the first intermediate contour with the contour of the overhang position to obtain a third intermediate contour; enlarging the third intermediate contour by the safety offset value to obtain a fourth intermediate contour according to a jtSquare parameter attribute; enlarging the third intermediate contour by the safety offset value to obtain a fifth intermediate contour according to a jtMiter parameter attribute; subtracting the fifth intermediate contour with the fourth intermediate contour to obtain a sixth intermediate contour; enlarging the sixth intermediate contour by a preset multiple to obtain a seventh intermediate contour; intersecting the seventh intermediate contour with the third intermediate contour are intersected to obtain the sharp corner area of the overhang position.

Using this technical scheme, the third intermediate contour and the seventh intermediate contour can be obtained according to the contour of the overhang position, the preset safety offset value, the jtSquare parameter attribute and the jtMiter parameter attribute, and then the sharp corner area of the overhang position can be determined by intersecting the seventh intermediate contour with the third intermediate contour.

Exemplarily, the non-sharp corner area of the overhang position includes two contour areas, the two contour areas respectively correspond to one preset support point density, and the two contour areas are determined by: subtracting the sharp corner area of the overhang position with the third intermediate contour to obtain a fourth contour; and defining the first intermediate contour and the fourth contour as the two contour areas of the non-sharp corner area of the overhang position.

Using this technical scheme, the non-sharp corner area of the overhang position can be divided into two contour areas, and different support point densities or the same support point densities can be set for the two contour areas of the non-sharp corner area to achieve model printing support.

Exemplarily, the method of setting the support points on each area according to corresponding preset support point density includes: sampling each area to obtain sampling points of each area by a random manner; setting the support points on the current area according to sampling points of the current area and a preset support point density corresponding to the current area; screening the support points on the current area to make a distance between any two support points is greater than or equal to a preset value.

Using this technical scheme, the sharp corner area of the model can be provided with support points, the non-sharp corner area and the sharp corner area can correspond to different support point densities, and the situation of the model printing failure due to absences of the support points on the sharp corner area can be avoided. The distance between any two support points can be greater than or equal to the preset value, the number of support points of the model can be reduced, and the printing speed of the model can be improved.

Exemplarily, the safety offset value is determined by: calculating the safety offset value according to a first preset formula, the first preset formula includes: offset_1 = h*tan(A1), offset_1 is the safety offset value, h is the preset layer height, and A1 is a preset safety angle; and the tilt offset value is determined by: calculating the tilt offset value according to a second preset formula, the second preset formula includes: offset_2 = h*tan(A2), offset_2 is the tilt offset value, and A2 is a preset tilt angle.

Using this technical scheme, when the preset safety angle and the layer height of the model are determined, the safety offset value can be calculated according to the first preset formula, and when the preset tilt angle and the layer height of the model are determined, the tilt offset value can be calculated according to the second preset formula.

Second aspect of this application provides a model support point setting device, the model support point setting device includes: a layering module, configured to layer a model into a plurality of layers according to a preset layer height, and obtain a contour of each of the plurality of layers; a locating module, configured to locate a suspended layer according to the contour of each of the plurality of layers, the model including a suspended part, and the suspended layer being the lowest layer of the suspended part; a first processing module, configured to obtain a suspension position of the suspended layer according to a contour of a lower layer of the suspended layer and a contour of the suspended layer; a second processing module, configured to determine a contour of an overhang position according to the suspension position of the suspended layer, and determine a sharp corner area and a non-sharp corner area of the overhang position according to the contour of the overhang position; and a setting module, configured to set support points on the sharp corner area and the non-sharp corner area of the overhang position according to preset support point densities corresponding to the sharp corner area and the non-sharp corner area of the overhang position.

Using this technical scheme, by obtaining the contour of the overhang position of the model, the overhang position is divided into a sharp corner area and a non-sharp corner area, and the sharp corner area and the non-sharp corner area can correspond to different support point densities, so that support points can be set on the sharp corner area that is easy to collapse of the model, and the situation of the model printing failure due to absences of the support points on the sharp corner area can be avoided.

Third aspect of this application provides an electronic device, the electronic device includes: a processor; and a storage medium configured to store instructions. When the instructions run on the processor, to cause the electronic device to execute the model support point setting method.

Fourth aspect of this application provides a computer readable storage medium, the computer readable storage medium stores computer instructions, when the computer instructions run on an electronic device, the electronic device is caused to execute the model support point setting method.

The above-mentioned electronic device and computer readable storage medium correspond to the above-mentioned nested word model generation method, therefore, beneficial effects of the electronic device and the computer readable storage medium that can be achieved can be referred to beneficial effects of corresponding methods provided above, and will not be repeated here.

### BRIEF DESCRIPTION OF DRAWINGS

FIG. 1 is a flowchart of a model support point setting method according to an embodiment of the present application.
FIG. 2A is a schematic diagram of a contour of a model according to an embodiment of the present application.
FIG. 2B is a schematic diagram of contours of a suspended layer, a lower layer of the suspended layer, and an upper layer of the suspended layer of the model shown in FIG. 2A.
FIG. 3 is a schematic diagram of a safety offset value and a tilt offset value calculated according to the suspended layer and lower layer of the suspended layer shown in FIG. 2B.
FIG. 4A is a schematic structural diagram of a first contour according to an embodiment of the present application.
FIG. 4B is a schematic structural diagram of a second contour according to an embodiment of the present application.
FIG. 4C is a schematic structural diagram of a contour of an overhang position according to an embodiment of the present application.
FIG. 4D is a schematic diagram of a division of a sharp corner area and a non-sharp corner area of the overhang position according to an embodiment of the present application.
FIG. 4E is a schematic diagram of a subdivision of the non-sharp corner area of the overhang position into two contour areas shown in FIG. 4D.
FIG. 4F is a schematic diagram of the division of the sharp corner area and the non-sharp corner area of the overhang position according to another embodiment of the present application.
FIG. 4G is a schematic diagram of a subdivision of the non-sharp corner area of the overhang position into two contour areas shown in FIG. 4F.
FIG. 5 is a schematic diagram of a model support point setting device according to an embodiment of the present application.
FIG. 6 is a schematic diagram of a 3D printer according to an embodiment of the present application.
FIG. 7 is a schematic diagram of an electronic device according to an embodiment of the present application.

### DESCRIPTION OF EMBODIMENTS

In order to more clearly understand the above purposes, features and advantages of the present application, the present application is described in detail below in conjunction with the drawings and the description of embodiments. It is understood that, embodiments of the present application and features in the embodiments may be combined with each other without conflict.

In the following description, many specific details are described in order to fully understand the present application, the described embodiments are only part of the present application, not all embodiments.

Unless otherwise defined, all technical and scientific terms used herein have the same meaning as those commonly understood by those skilled in the technical art of the present application. The terms used herein in the description of the present application are only for a purpose of describing the embodiments, and are not intended to limit the present application.

It should be further noted that, the term "including", "comprising" or any other variation thereof is intended to cover non-exclusive inclusions, so that a process, a method, an article or an apparatus including a series of elements includes not only those elements, but also includes other elements not expressly listed, or also includes elements inherent in such process, method, article or device. Without further restrictions, an element limited by the statement "including a..." does not exclude ab existence of another identical element in the process, method, article or apparatus including the element.

In the present application, "at least one" refers to one or more, "multiple" refers to two or more than two. "and/or", describing the association relationship of the associated object, indicates that there may be three relationships, for example, A and/or B may mean: the existence of A alone, the existence of A and B at the same time, the existence of B alone, where A, B can be singular or plural. The terms "first", "second", "third", "fourth" etc. (if exist) in the embodiments, claims, and drawings of the present application are used to distinguish similar objects, and are not used to describe a specific order or sequence.

In an embodiment of the present application, the words "for example" or "such as" are used to indicate as examples, illustrations or illustrations. Any embodiment or design described as " for example " or "such as" of the present application shall not be construed as being exemplary or more advantageous than other embodiments or designs. The use of words such as " for example " or " such as " is intended to present a concept in a concrete way.

This application provides a model support point setting method, the model support point setting method includes: layering a model into a plurality of layers according to a preset layer height, and obtaining a contour of each of the plurality of layers; locating a suspended layer according to the contour of each of the plurality of layers, the model including a suspended part, and the suspended layer being the lowest layer of the suspended part; obtaining a suspension position of the suspended layer according to a contour of a lower layer of the suspended layer and a contour of the suspended layer; determining a contour of an overhang position according to the suspension position of the suspended layer, and determining a sharp corner area and a non-sharp corner area of the overhang position according to the contour of the overhang position; and setting support points on the sharp corner area and the non-sharp corner area of the overhang position according to preset support point densities corresponding to the sharp corner area and the non-sharp corner area of the overhang position.

The model support point setting method obtains the contour of the overhang position of the model and divides the overhang position into a sharp corner area and a non-sharp corner area. The sharp corner area and the non-sharp corner area can correspond to different support point densities, support points can be set on the sharp corner area that is easy to collapse of the model, and the situation of the model printing failure due to absences of the support points on the sharp corner area can be avoided.

The model support point setting method of the present application can be applied to a 3D printer or an electronic device. The electronic device can be a device that can automatically perform numerical calculations and/or information processing according to pre-set or stored instructions, and hardware of the electronic device can include but is not limited to microprocessors, application-specific integrated circuits (ASICs), field-programmable gate arrays (FPGAs), and digital signal processors (DSPs), embedded devices, etc. The electronic device can be computing devices, such as desktop computers, laptops, servers, industrial computers, etc. The electronic device can interact with a user through keyboards, mice, remote controls, touchpads, or voice-activated devices.

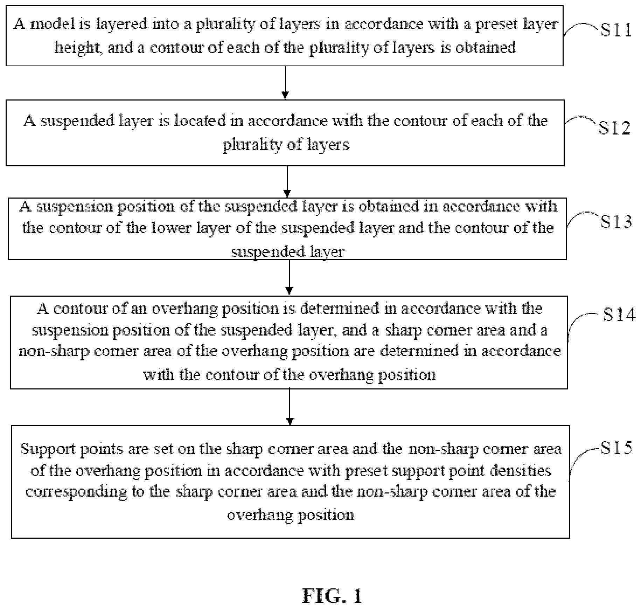

Referring to FIG. 1, FIG. 1 is a flowchart of a model support point setting method according to an embodiment of the present application. A sequence of blocks in the flowchart can be changed and some blocks can be omitted according to different requirements, the model support point setting method may include the following blocks.

In block S11, a model is layered into a plurality of layers according to a preset layer height, and a contour of each of the plurality of layers is obtained.

In some embodiments, the model can be built according to contour parameters of an object to be printed, and the object to be printed can be selected according to actual printing requirements, and the application does not limit this. For example, the model of the object to be printed can be designed through a model design software, such as a computer aided design (CAD) software. The model can be layered by a slice/layering software, which can be the current slice/layering software, such as Magics software.

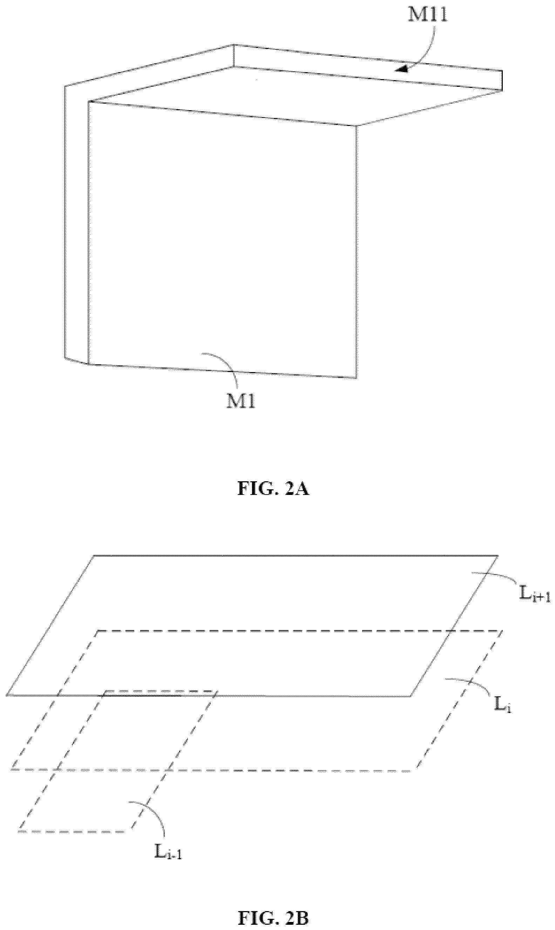

As shown in FIG. 2A, if a height of the model M1 is 16.4 cm and the layer height of the model M1 set by a user is 0.05 cm, and the model M1 can be divided into 328 layers (16.4/0.05). When the model M1 is layered, the contour of each layer of the model M1 can be obtained.

In block S12, a suspended layer is located according to the contour of each of the plurality of layers.

In some embodiments, in a process of model printing, a phenomenon of printing materials falling during the process of model printing can be avoided by adding support points to the model, and a success rate of model printing can be improved. For example, the model includes a suspended part, printing materials falling during an accumulation at the suspended part can be avoided by adding supports for the suspended part. The overhang layer can be located by traversing the contour of each of the plurality of layers. As shown in FIG. 2A, the model M1 includes the suspended part M11, the suspended layer can be the lowest layer of the suspended part M11. As shown in FIG. 2B, if Lᵢ represents a contour of the suspended layer of the model M1, Lᵢ₋₁ represents a contour of the lower layer of the suspended layer, and Lᵢ₊₁ represents a contour of the upper layer of the suspended layer.

In block S13, a suspension position of the suspended layer is obtained according to the contour of the lower layer of the suspended layer and the contour of the suspended layer.

In some embodiments, when the suspended layer is determined, the suspension position of the suspended layer can be obtained n accordance with the contour of the lower layer of the suspended layer and the contour of the suspended layer. The suspension position of the suspended layer can be a difference area between the contour of the suspended layer and the contour of the lower layer of the suspended layer. For example, the suspension position of the suspended layer can by obtained by subtracting the contour of the suspended layer with the contour of the lower layer of the suspended layer.

In block S14, a contour of an overhang position is determined according to the suspension position of the suspended layer, and a sharp corner area and a non-sharp corner area of the overhang position are determined according to the contour of the overhang position.

In some embodiments, the suspension position can be divided into three types of areas: a safety area, a tilt area, and the overhang position. The safety area can be a part of the suspension position, and no support points need to be set on the safety area. The tilt area can be a part of the suspension position, and few support points need to be set on the tilt area. The overhang position can be an area in the suspension position except the safety area and the tilt area, and more support points need to be set on the overhang position than the tilt area. For example, when the safety area and the tilt area of the suspension position are determined, the contour of the overhang position can be obtained by subtracting the contour of the suspension position with the contour of the safety area and the contour of the tilt area.

In some embodiments, the suspension position can also be directly defined as the overhang position, that is, divisions of the safety area and the tilt area are omitted, and all areas of the suspension position are taken as the overhang position.

In some embodiments, the suspension position can also be divided into the overhang position and the safety area according to whether or not setting support points. That is, the tilt area is classified as the overhang position. For example, when the safe area of the suspension position is determined, the contour of the overhang position can be obtained by subtracting the contour of the suspension position with the contour of the safety area.

In some embodiments, the safety area can be determined according to the contour of the lower layer of the suspended layer, a preset safety angle, and the preset layer height, and the tilt area can be determined according to the contour of the safety area, a preset tilt angle and the preset layer height. The preset safety angle and the preset tilt angle can be set by the user before model printing, values of the preset safety angle and the preset tilt angle can be set and adjusted according to actual printing requirements, and this application is not limited to this. The preset safety angle can represent a suspension part that is cooled and formed within this angle does not need to set support points. The preset tilt angle can represent a suspension part that is cooled and formed within this angle need to set few support points. For example, the preset safety angle A1 is 35 degrees and the preset tilt angle A2 is 75 degrees.

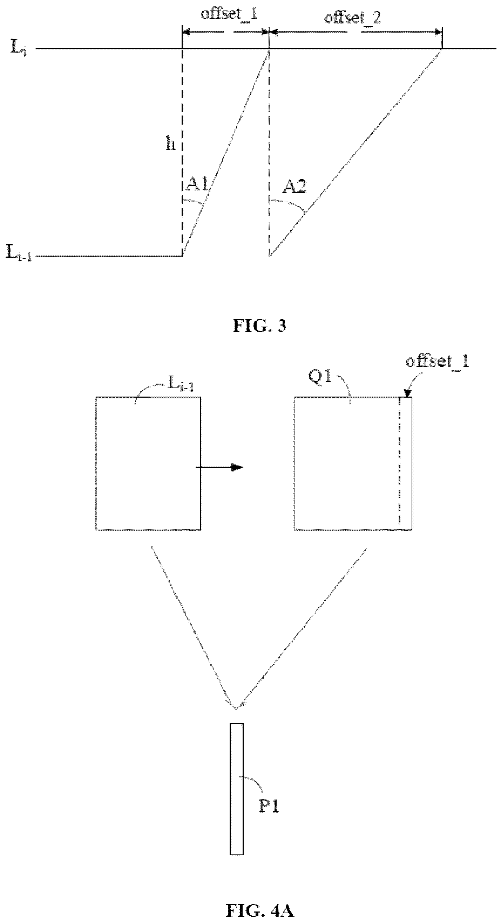

Referring to FIG. 3, for the contour Lᵢ of the suspended layer and the contour Lᵢ₋₁ of the lower layer of the suspended layer, if the layer height of the model M1 is h, the safety offset value offset_1 can be calculated according to the preset safety angle A1 and the layer height h, and the tilt offset value offset_2 can be calculated according to the preset tilt angle A2 and the layer height h. For example, the safe offset value offset_1 can be calculated according to a first preset formula, the first preset formula may be: offset_1 = h*tan(A1). The tilt offset value offset_2 can be calculated according to a second preset formula, and the second preset formula may be: offset_2 = h*tan(A2).

In some embodiments, the safety offset value offset_1 and the tilt offset value offset_2 can also be set by the user before model printing, that is, it is not necessary to calculate the safety offset value offset_1 and the tilt offset value offset_2 according to the first preset formula and the second preset formula.

In some embodiments, the contour Lᵢ₋₁ of the lower layer of the suspended layer can be offset along a first direction according to the safety offset value offset_1, and a first offset contour Q1 can be obtained. The first contour P1 can be obtained by subtracting the first offset contour Q1 with the contour Lᵢ₋₁ of the lower layer of the suspended layer, the first contour P1 may be the safety area of the suspension position. The first direction may be an extension direction of the contour Lᵢ₋₁ of the lower layer of the suspended layer.

Referring to FIG. 4A, the contour Lᵢ₋₁ of the lower layer of the suspended layer is offset along the first direction by the safety offset value offset_1 to obtain the first offset contour Q1 according to a offset function of a Clipper library, and the first contour P1 can be obtained by subtracting the first offset contour Q1 with the contour Lᵢ₋₁ of the lower layer of the suspended layer.

In some embodiments, the first contour P1 can be offset along the first direction by the tilt offset value offset_2 to obtain the second offset contour Q2, and the second contour P2 can be obtained by subtracting the second intermediate contour O2 with the first contour P1, the second contour P2 may be the tilt area of the suspension position.

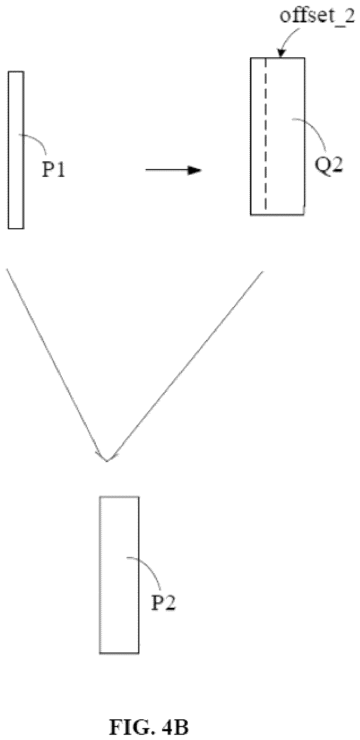

As shown in FIG. 4B, the first contour P1 is offset along the first direction by the tilt offset value offset_2 to obtain the second offset contour Q2 according to the offset function of the Clipper library, and the second contour P2 can be obtained by subtracting the second offset contour Q2 with the first contour P1.

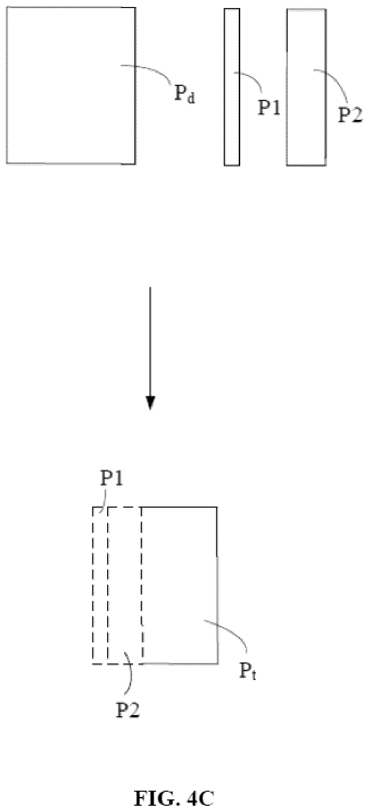

In some embodiments, the suspension position is divided into the overhang position, the safety area (a area included in the contour profile P1), and the tilt area (a area included in the second contour P2) as an example, when the first contour P1 and the second contour P2 are obtained, the contour of the overhang position can be obtained by subtracting the contour of the suspension position with the first contour P1 and the second contour P2. As shown in FIG. 4C, the contour Pₜ of the overhang position is obtained by subtracting the contour P_{d} of the suspension position with the first contour P1 and the second contour P2.

In some embodiments, the overhang position can be divided into one or more sharp corner areas and one or more non-sharp corner areas. The non-sharp corner areas can be areas in the overhang position except the sharp corner areas.

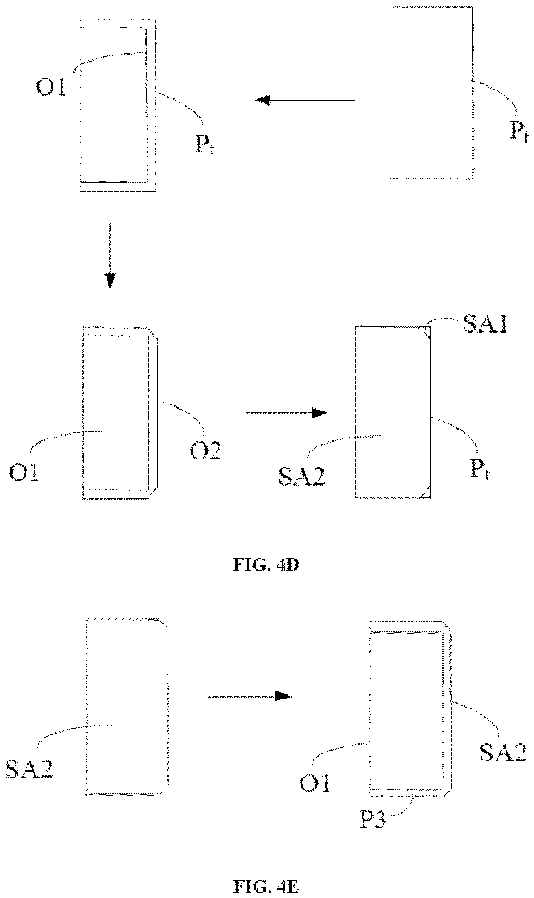

In some embodiments, referring to FIG. 4D, when the contour Pₜ of the overhang position is obtained, the sharp corner area SA1 and the non-sharp corner area SA2 of the overhang position can be determined by following manners: a1). lessening the contour Pₜ of the overhang position to obtain a first intermediate contour O1 according to the safety offset value offset_1, for example, the contour Pₜ of the overhang position is quadrilateral, and four sides of the contour Pₜ of the overhang position are lessened along a center point direction of the contour Pₜ by the safety offset value offset_1 to obtain the first intermediate contour O1; a2). enlarging the first intermediate contour O1 by the safety offset value offset_1 to obtain a second intermediate contour O2 according to a jtSquare parameter attribute of the Clipper library; a3). obtaining two sharp corner areas SA1 of the overhang position by subtracting the contour Pₜ of the overhang position with the second intermediate contour O2; a4). obtaining the non-sharp corner area SA2 of the overhang position by subtracting the contour Pₜ of the overhang position with the two sharp corner areas SA1.

In some embodiments, if a left edge of the first intermediate contour O1 is not ignored, four sharp corner areas SA1 of the overhang position can be obtained according to the above manners a1 to a3.

In some embodiments, referring to FIG. 4E, the non-sharp corner area SA2 of the overhang position may include two contour areas, each of the two contour areas may respectively correspond a preset support point density, for example, the two contour areas can correspond to different preset support point densities. When the sharp corner area SA1 and the non-sharp corner area SA2 of the overhang position are determined according to a manner as shown in FIG. 4D, the two contour regions of the non-sharp corner area SA2 can be determined by following manners: subtracting the second intermediate contour O2 with the first intermediate contour O1 to obtain a third contour P3; and defining the first intermediate contour O1 and the third contour P3 as the two contour areas of the non-sharp corner area SA2 of the overhang position.

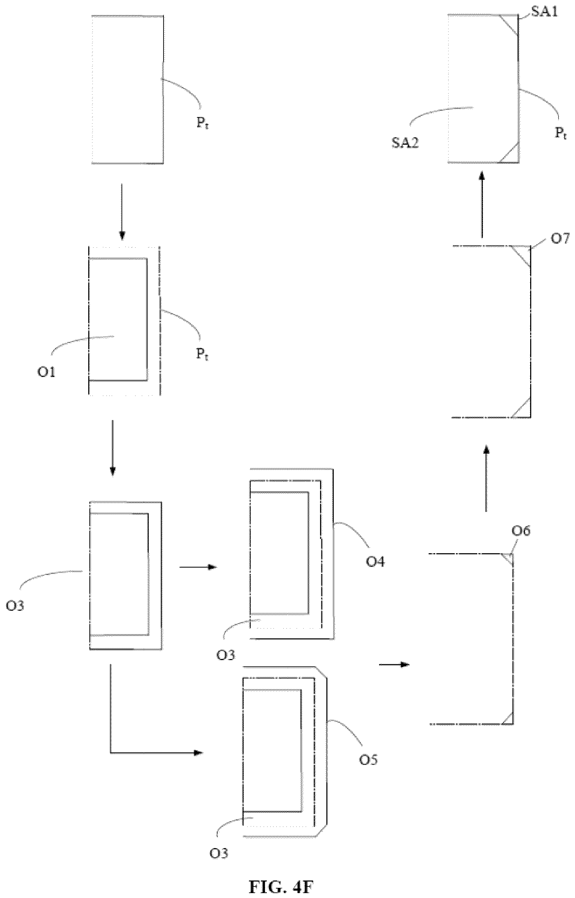

In some embodiments, referring to FIG. 4F, when the contour Pₜ of the overhang position is determined, the sharp corner area SA1 and the non-sharp corner area SA2 of the overhang position can be determined according to the contour Pₜ of the overhang position under following manners: b1). lessening the contour Pₜ of the overhang position to obtain the first intermediate contour O1 according to the safety offset value offset_1; b2). subtracting the first intermediate contour O1 with the contour Pₜ of the overhang position to obtain a third intermediate contour O3; b3). enlarging the third intermediate contour O3 by the safety offset value offset_1 to obtain a fourth intermediate contour O4 according to a jtSquare parameter attribute of the Clipper library; b4). enlarging the third intermediate contour O3 by the safety offset value offset_1 to obtain a fifth intermediate contour O5 according to a jtMiter parameter attribute of the Clipper library; b5). subtracting the fifth intermediate contour O5 with the fourth intermediate contour O4 to obtain a sixth intermediate contour O6; b6). enlarging the sixth intermediate contour O6 by a preset multiple to obtain a seventh intermediate contour O7; b7). intersecting the seventh intermediate contour O7 with the third intermediate contour O3 to obtain two sharp corner areas SA1 of the overhang position; b8). obtaining the non-sharp corner area SA2 of the overhang position by subtracting the contour Pₜ of the overhang position with the two sharp corner areas SA1.

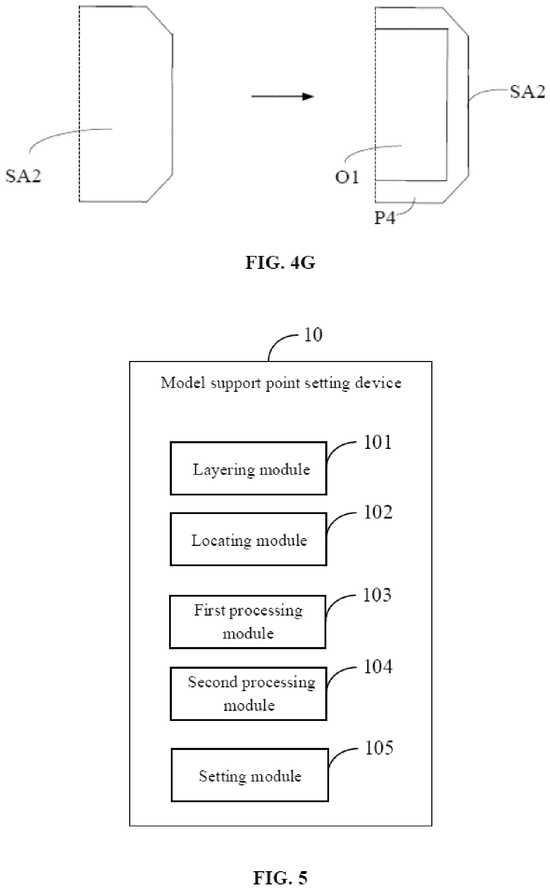

In some embodiments, referring to FIG. 4G, the non-sharp corner area SA2 of the overhang position may include two contour areas, each of the two contour areas may respectively correspond a preset support point density, for example, the two contour areas can correspond to different preset support point densities. When the sharp corner area SA1 and the non-sharp corner area SA2 of the overhang position are determined according to a manner as shown in FIG. 4F, the two contour regions of the non-sharp corner area SA2 can be determined by following manners: subtracting the third intermediate contour O3 with the sharp corner area SA1 to obtain a fourth contour P4; and defining the first intermediate contour O1 and the fourth contour P4 as the two contour areas of the non-sharp corner area SA2 of the overhang position.

In some embodiments, the preset multiple can be set according to actual requirements, for example, the preset multiple is set to 1.5-3.

In block S15, support points are set on the sharp corner area and the non-sharp corner area of the overhang position according to preset support point densities corresponding to the sharp corner area and the non-sharp corner area of the overhang position.

In some embodiments, when the sharp corner area of the overhang position is determined, the support points are can be respectively set on the sharp corner area SA1 and the non-sharp corner area SA2 of the overhang position according to corresponding preset support point densities. The sharp corner area SA1 and the non-sharp corner area SA2 of the overhang position can correspond to different preset support point densities. By locating the sharp corner area SA1 of the overhang position and setting the support points on the sharp corner area SA1, the support points can be ensured to be set on the sharp corner area SA1 at the most edge of the model M1, so as to avoid a collapse of the sharp corner area during a printing process of the model M1.

In some embodiments, when the suspension position is divided into the contour Pₜ of the overhang position, the first contour P1, and the second contour P2, support points can also be set on a area where the first contour P1 is located according to a corresponding preset support point density of the first contour P1, and the support points can also be set on a area where the second contour P2 is located according to a corresponding preset support point density of the second contour P2. The preset support point densities corresponding to the first contour P1 and the second contour P2 can be set according to actual printing requirements. For example, a support point density corresponding to the first contour P1 is less than a support point density corresponding to the second contour P2, and the support point density corresponding to the second contour P2 is less than a support point density corresponding to the non-sharp corner area of the overhang position.

In some embodiments, for each area that need to be provided with support points (such as the sharp corner area SA1, the non-sharp corner area SA2, the first contour P1, the second contour P2, etc.), support points can be set for each area according to corresponding preset support point densities under following manners: c1). dividing the current area that need to be provided with support points into a plurality of triangles, and sampling the plurality of triangles to obtain sampling points by a random manner; c2). setting the support points on the current area according to sampling points of the current area and a preset support point density corresponding to the current area; c3). screening the support points on the current area to make a distance between any two support points on the current area is greater than or equal to a preset value. By screening the support points, the number of support points on each area can meet a printing support requirement of the model M1, the printing speed of the model can be improved, and printing materials can also be saved.

In some embodiments, when screening the support points, it preferentially set support points on the sharp corner area SA1 of the overhang position, to ensure support points being set one the sharp corner area SA1.

In some embodiments, a Poisson sampling algorithm can be used to randomly sample points in the triangles to obtain the sampling points. The preset value can also be set according to actual requirements, and this application is not limited to this, for example, the preset value can be set to 1cm.

In some embodiments, after the support points of the model M1 are set, the model M1 can be sliced to obtain a geometric code (Gcode) file, and the 3D printer can print the model M1 including supports according to the Gcode file, and the model M1 can be obtained by removing the supports.

FIG. 5 is a schematic structural diagram of a model support point setting device according to an embodiment of the present application. Referring to FIG. 5, the model support point setting device 10 can be applied to an electronic device. The model support point setting device 10 may include one or more modules. For example, as shown in FIG. 5, the model support point setting device 10 may include a layering module 101, a locating module 102, a first processing module 103, a second processing module 104, and a setting module 105.

It is understandable that the model support point setting device 10 may include some or all of functional modules shown in FIG. 5 corresponding to each embodiment in the above-mentioned model support point setting method, and a function of each module 101-105 is specifically described as below. It should be noted that the same nouns, the related nouns, and the specific explanations in embodiments of the above-mentioned model support point setting method can also be applied to functional introductions for each module 101-105. For a sake of space and repetition, it's not described in this embodiment.

The layering module 101 is configured to layer a model into a plurality of layers according to a preset layer height, and obtain a contour of each of the plurality of layers.

The locating module 102 is configured to locate a suspended layer according to the contour of each of the plurality of layers, the model includes a suspended part, and the suspended layer is the lowest layer of the suspended part.

The first processing module 103 is configured to obtain a suspension position of the suspended layer according to a contour of a lower layer of the suspended layer and a contour of the suspended layer.

The second processing module 104 is configured to determine a contour of an overhang position according to the suspension position of the suspended layer, and determine a sharp corner area and a non-sharp corner area of the overhang position according to the contour of the overhang position.

The setting module 105 is configured to set support points on the sharp corner area and the non-sharp corner area of the overhang position according to preset support point densities corresponding to the sharp corner area and the non-sharp corner area of the overhang position.

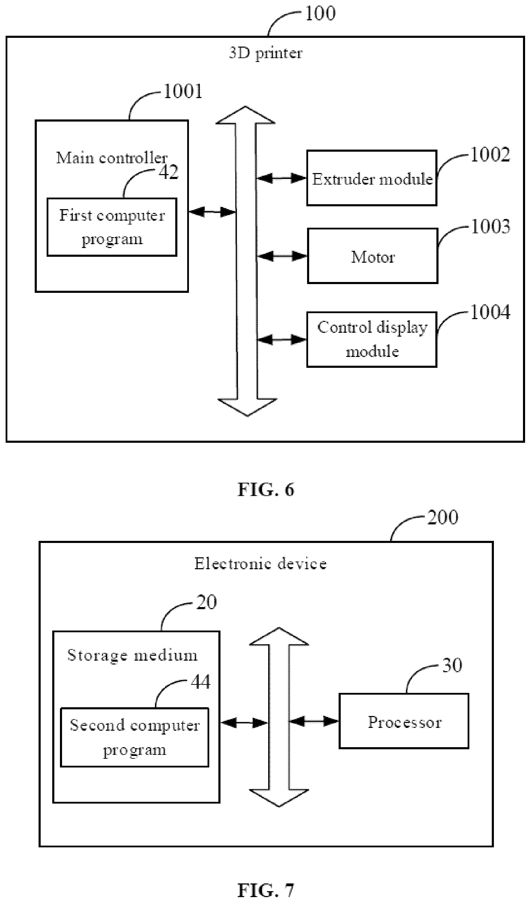

FIG. 6 is a schematic structural diagram of a 3D printer according to an embodiment of the present application.

The 3D printer 300 may include a main controller 1001, an extruder module 1002, a motor 1003 and a control display module 1004.

The main controller 1001 can execute programs or instructions to control the motor 1003 and the control display module 1004 to display information, communicate with other subassemblies, etc. The extruder module 1002 may include an extruder, a heating rod, etc., which can realize a heating and extrusion of printing materials. The control display module 1004 may include buttons, touch displays, etc., and can allow users to input control instructions, display a use situation of the 3D printer 100 and a printing progress, etc.

A first computer program 42 can be stored in a flash memory of the main controller 1001, and the main controller 1001 can execute the first computer program 42 to achieve printing the model M1 including the supports according to a Gcode file.

For example, the first computer program 42 may also be divided into one or more modules/units, and one or more modules/units are stored in the flash memory of the main controller 1001 and executed by the main controller 1001 to complete one or more technical scheme of the present application. The one or more modules/units may be a series of computer program instruction segments capable of completing a specific function, and the instruction segments are used for describing a execution process of the first computer program 42 in the 3D printer 100. The main controller 1001 can be a microprocessor, a single-chip microcomputer, etc.

A skilled in the art can understand that the schematic diagram is only an example of the 3D printer 100 and does not form a limitation to the 3D printer 100, and the 3D printer 100 may include more or fewer components than illustrated, or combine some components, or different components, such as the 3D printer 100 may further include communication modules, etc.

FIG. 7 is a schematic structural diagram of an electronic device according to an embodiment of the present application.

The electronic device 200 may a storage medium 20, a processor 30 and a second computer program 44 stored in the storage medium 20 and can run on the processor 30. When the processor 30 executes the second computer program 44, blocks in the embodiments of the model support point setting method can be realized, such as blocks S11-S15 shown in FIG. 1.

Exemplary, the second computer program 44 may also be divided into one or more modules/units, and the one or more modules/units are stored in storage medium 20 and executed by the processor 30. The one or more modules/units may be a series of computer program instruction segments capable of completing a specific function, and the instruction segments are used for describing a execution process of the second computer program 44 in the electronic device 200. For example, the second computer program 44 can be divided into the layering module 101, the locating module 102, the first processing module 103, the second processing module 104, and the setting module 105 as shown in FIG. 5.

The electronic device 200 can be desktop computers, notebooks, handheld computers, industrial computers, tablet computers, servers and other computing devices. The skilled in the art can understand that the schematic diagram is only an example of the electronic device 200 and does not form a limitation to the electronic device 200, and the electronic device 200 may include more or fewer components than illustrated, or combine some components, or different components, such as the electronic device 200 may further include input and output devices, network access devices, buses, etc.

The processor 30 can be a central processing unit (CPU), or other general-purpose processors, digital signal processors (DSPs), application-specific integrated circuits (ASICs), field-programmable gate arrays (FPGAs), or other programmable logic devices, discrete gates or transistor logic devices, discrete hardware components, etc. The general-purpose processors can be microprocessors, single chips. The processor 30 also can be other conventional processors, etc.

The storage medium 20 can be used to store the second computer program 44 and/or modules/units, and the processor 30 realizes various functions of the electronic device 200 by running or executing computer programs and/or modules/units stored in storage medium 20 and calling data stored in the storage medium 20. The storage medium 20 may include a program storing area and a data storing area, the program storing area can store an operating system, applications required for at least one function (such as a sound playback function, a image playback function, etc.), and the data storing area can store data (for example audio data) that is created according to a use of the electronic device 200. In addition, the storage medium 20 may include high-speed random access memory and non-volatile memory, such as hard disks, memory, pluggable hard drives, smart media cards (SMCs), secure digital (SD) cards, Flash cards, at least one disk storage device, flash memory devices, or other non-volatile solid-state storage devices.

The modules/units integrated in the electronic device 200 can be stored in a computer-readable storage medium if implemented in a form of software functional units and marketed or used as a stand-alone product. Under this manner, all or part of processes of the method of the embodiments of the present application can be completed by instructing relevant hardware through a computer program, the computer program can be stored in a computer readable storage medium, and the computer program can realize the blocks of the embodiment of each method when it is executed by the processor. The computer program may include computer program code, and the computer program code may be in a form of source codes, object codes, executable files, or some intermediate forms, etc. The computer readable medium may include any entity or device capable of carrying the computer program code, such as a recording medium, a USB flash drive, a mobile hard disk, a magnetic disk, an optical disc, a computer memory, a read-only memory (ROM), a random access memory (RAM), an electric carrier signal, a telecommunication signal, and a software distribution medium. It should be noted that types included in the computer-readable medium may be appropriately increased or subtracted according to requirements of legislations and patent practices in jurisdictions, for example, in some jurisdictions, the computer-readable medium does not include the electric carrier signal and the telecommunication signal according to legislation and patent practice.

In some embodiments, it can be understood that the electronic devices and methods may be realized by other manners. For example, the embodiment of the electronic device described above is only schematic, for example, the division of the units/modules is only a logical function division, and it may exist another division manner when it is actually realized.

In addition, each functional unit in each embodiment of the present application may be integrated in the same processing unit, or each unit may separately exist, or two or more units may be integrated in the same unit. The above-mentioned integrated unit can be realized in a form of hardware or in a form of hardware plus software function module.

It should be noted that the above embodiments are only used to illustrate the technical solution of the present application and not to limit it, although the present application is described in detail by the above embodiments, a person of ordinary skill in the art can be understand that the technical solution of the present application may be modified or replaced, without departing from a spirit and a scope of the technical solution of the present application.

## Claims

1. A model support point setting method, **characterized in that**, the model support point setting method comprises:
layering a model into a plurality of layers according to a preset layer height, and obtaining a contour of each of the plurality of layers;
locating a suspended layer according to the contour of each of the plurality of layers, wherein the model comprises a suspended part, and the suspended layer is the lowest layer of the suspended part;
obtaining a suspension position of the suspended layer according to a contour of a lower layer of the suspended layer and a contour of the suspended layer;
determining a contour of an overhang position according to the suspension position of the suspended layer, and determining a sharp corner area and a non-sharp corner area of the overhang position according to the contour of the overhang position; and
setting support points on the sharp corner area and the non-sharp corner area of the overhang position according to preset support point densities corresponding to the sharp corner area and the non-sharp corner area of the overhang position.

2. The model support point setting method of claim 1, **characterized in that**, determining the contour of the overhang position according to the suspension position of the suspended layer comprises:
determining a first contour according to a safety offset value and the contour of the lower layer of the suspended layer;
determining a second contour according to a tilt offset value and the first contour; and
obtaining the contour of the overhang position by subtracting the first contour and the second contour with a contour of the suspension position of the suspended layer;
or
determining the first contour according to the safety offset value and the contour of the lower layer of the suspended layer; and
obtaining the contour of the overhang position by subtracting the first contour with the contour of the suspension position of the suspended layer;
or
defining the contour of the suspension position of the suspended layer as the contour of the overhang position.

3. The model support point setting method of claim 2, **characterized in that**, comprising:
setting the support points on an area where the first contour is located according to a preset support point density corresponding to the first contour; and
setting the support points on an area where the second contour is located according to a preset support point density corresponding to the second contour.

4. The model support point setting method of claim 1, **characterized in that**, determining the sharp corner area of the overhang position according to the contour of the overhang position comprises:
lessening the contour of the overhang position to obtain a first intermediate contour according to the safety offset value;
enlarging the first intermediate contour by the safety offset value to obtain a second intermediate contour according to a jtSquare parameter attribute; and
determining the sharp corner area of the overhang position by subtracting the second intermediate contour with the contour of the overhang position.

5. The model support point setting method of claim 4, **characterized in that**, the non-sharp corner area of the overhang position comprises two contour areas, the two contour areas respectively correspond to one preset support point density, and the two contour areas are determined by:
subtracting the first intermediate contour with the second intermediate contour to obtain a third contour; and
defining the first intermediate contour and the third contour as the two contour areas of the non-sharp corner area of the overhang position.

6. The model support point setting method of claim 1, **characterized in that**, determining the sharp corner area of the overhang position according to the contour of the overhang position comprises:
lessening the contour of the overhang position to obtain a first intermediate contour according to the safety offset value;
subtracting the first intermediate contour with the contour of the overhang position to obtain a third intermediate contour;
enlarging the third intermediate contour by the safety offset value to obtain a fourth intermediate contour according to a jtSquare parameter attribute;
enlarging the third intermediate contour by the safety offset value to obtain a fifth intermediate contour according to a jtMiter parameter attribute;
subtracting the fifth intermediate contour with the fourth intermediate contour to obtain a sixth intermediate contour;
enlarging the sixth intermediate contour by a preset multiple to obtain a seventh intermediate contour; and
intersecting the seventh intermediate contour with the third intermediate contour to obtain the sharp corner area of the overhang position.

7. The model support point setting method of claim 6, **characterized in that**, the non-sharp corner area of the overhang position comprises two contour areas, the two contour areas respectively correspond to one preset support point density, and the two contour areas are determined by:
subtracting the sharp corner area of the overhang position with the third intermediate contour to obtain a fourth contour; and
defining the first intermediate contour and the fourth contour as the two contour areas of the non-sharp corner area of the overhang position.

8. The model support point setting method of any one of claims 1 to 7, **characterized in that**, setting the support points on each area according to corresponding preset support point density comprises:
sampling each area to obtain sampling points of each area by a random manner;
setting the support points on the current area according to sampling points of the current area and a preset support point density corresponding to the current area; and
screening the support points on the current area to make a distance between any two support points is greater than or equal to a preset value.

9. The model support point setting method of claim 2, **characterized in that**, the safety offset value is determined by:
calculating the safety offset value according to a first preset formula, wherein the first preset formula comprises: offset_1 = h*tan(A1), offset_1 is the safety offset value, h is the preset layer height, and A1 is a preset safety angle; and
the tilt offset value is determined by:
calculating the tilt offset value according to a second preset formula, wherein the second preset formula comprises: offset_2 = h*tan(A2), offset_2 is the tilt offset value, and A2 is a preset tilt angle.

10. A model support point setting device, **characterized in that**, the model support point setting device comprises:
a layering module, configured to layer a model into a plurality of layers according to a preset layer height, and obtain a contour of each of the plurality of layers;
a locating module, configured to locate a suspended layer according to the contour of each of the plurality of layers, wherein the model comprises a suspended part, and the suspended layer is the lowest layer of the suspended part;
a first processing module, configured to obtain a suspension position of the suspended layer according to a contour of a lower layer of the suspended layer and a contour of the suspended layer;
a second processing module, configured to determine a contour of an overhang position according to the suspension position of the suspended layer, and determine a sharp corner area and a non-sharp corner area of the overhang position according to the contour of the overhang position; and
a setting module, configured to set support points on the sharp corner area and the non-sharp corner area of the overhang position according to preset support point densities corresponding to the sharp corner area and the non-sharp corner area of the overhang position.

11. An electronic device, comprising:
a processor; and
a storage medium, configured to store instructions, **characterized in that**, when the instructions run on the processor, to cause the electronic device to execute a model support point setting method according to any one of claims 1 to 9.

12. A computer readable storage medium, **characterized in that**, the computer readable storage medium stores computer instructions, when the computer instructions run on an electronic device, the electronic device is caused to execute a model support point setting method according to any one of claims 1 to 9.
